# EUROPÄISCHE PATENTSCHRIFT

(11) **EP 3 092 889 B1**
(45) Veröffentlichungstag und Bekanntmachung des Hinweises auf die Patenterteilung: **10.07.2019**
(21) Anmeldenummer: 16001087.2
(22) Anmeldetag: 12.05.2016
(51) Int. Cl.: A01D 90/04, A01F 15/10, A01F 29/09

(54) **SCHNEIDWERK FÜR LANDWIRTSCHAFTLICHE ERNTEMASCHINEN**
CUTTER UNIT FOR AGRICULTURAL HARVESTERS
BARRE DE COUPE POUR MOISSONNEUSES AGRICOLES

(30) Priorität: 13.05.2015 DE 102015006017
(43) Veröffentlichungstag der Anmeldung: 16.11.2016
(73) Patentinhaber: Maschinenfabrik Bernard Krone GmbH & Co. KG, 48480 Spelle (DE)
(72) Erfinder: Jung, Stefan, 48612 Horstmar (DE)

(56) Entgegenhaltungen:
- EP-A1- 0 689 760
- DE-A1-102013 007 303
- US-A- 5 779 167
- US-A- 5 941 469

## Beschreibung

Die vorliegende Erfindung bezieht sich auf ein Schneidwerk für landwirtschaftliche Erntemaschinen wie beispielsweise Ladewagen oder Ballenpressen zum Ernten von landwirtschaftlichem Halm- oder Blattgut mit einem Förderkanal, in dem eine Mehrzahl von zumindest in einer Reihe angeordneten und in einer Schneidstellung in den Förderkanal hineinragenden plattenförmigen Schneidmessern, die umfangsseitig zumindest eine vorzugsweise sichelförmige Schneide aufweisen, mit einem mit Förderzinken versehenen Förderorgan zur Halmgutzerkleinerung zusammenwirken, wobei die Schneidmesser im Bereich der Schneide einseitig eine derart angeformte wellenförmige Oberflächenkontur aufweisen, dass sich in diesem Bereich die Materialstärke radial nach außen zur Schneide hin keilförmig reduziert.

Schneidwerke der oben beschriebenen Art finden sich heute in vielen Erntemaschinen in verschiedenen bekannten Ausführungen wieder. Die Ansprüche an das Erntegut, insbesondere dann wenn es sich um Silage als Viehfutter handelt, sind besonders in den letzten Jahren stark gestiegen. Immer kürzere Schnittlängen und optimale Schnittqualitäten werden von den Schneidwerken der Erntemaschinen erwartet. Gleichzeitig müssen der Durchsatz und insgesamt die Leistungsfähigkeit der Maschinen für einen wirtschaftlichen Einsatz ständig verbessert werden. Mehr Durchsatz bedeutet jedoch auch gleichzeitig mehr Verschleiß. Um eine gute Schnittqualität der Schneidmesser sicherzustellen, kann es deshalb beim Dauereinsatz der Erntemaschinen notwendig sein, die Schneidmesser mehrfach am Tag nachzuschleifen, beziehungsweise auszutauschen.

Um den, bei bis zu 50 Messer umfassenden Messersätzen, sehr zeitaufwändigen und arbeitsintensiven Vorgang des Messerwechsels auf dem Feld zu vermeiden, sind in jüngerer Vergangenheit Schneidwerke entwickelt worden, welche eine Messerschleifeinrichtung aufweisen, mit der das Nachschärfen der Messer direkt an der Maschine ohne Ausbau erfolgen kann.

Eine besonders vorteilhafte Ausführung einer solchen Schleifeinrichtung wird durch die EP 1 621 065 A1 offenbart. Mit der offenbarten Schleifeinrichtung ist es möglich mehrere, oder sogar alle Messer des Schneidwerks gleichzeitig zu schleifen. Durch derartige, integrierte Schleifeinrichtungen werden erhebliche Zeitvorteile erzielt. Ein durch die Geometrie der allgemein eingesetzten Schneidmesser bedingter Umstand wirkt sich jedoch, insbesondere bei integrierten Schleifeinrichtungen, negativ auf die Schleifzeit aus.

In der Praxis hat sich gezeigt, dass sich Schneidmesser mit einer gewellten oder gezackten Schneide vorteilhaft auf die Schneidkraft und die Schnittqualität auswirken. Dazu haben die plattenförmigen Messer eine glatte und eine gewellte Schneidwange. Die Wellenform verläuft dabei in der Regel zumindest annähernd rechtwinklig zur Schneidkante. Durch die zur Messeroberfläche leicht schräg eingebrachte Wellenform verjüngt sich das Schneidmesser nach außen zur Schneide hin. Der Schneidenanschliff erfolgt von der gegenüberliegenden glatten Messerfläche. Somit entsteht eine sehr spitze, scharfe, wellenförmige Schneide am Schneidmesser. Das Dokument EP 0 689 760 A1 offenbart ein solches beschriebenes Messer. Die Keilform des Schneidmessers im Bereich der Wellenprägung bedingt, dass die Breite der Nachschleiffläche auf der glatten Messerseite entlang der Schneide mit jedem Nachschliff zunimmt. Bis zur Verschleißgrenze des Schneidmessers, die dort erreicht ist, wo die Wellenprägung zur Messermitte hin ausläuft und die Schneidkante somit nicht mehr wellenförmig wäre, kann sich die Nachschleiffläche und damit auch die Nachschleifzeit mehr als verdoppeln. Sowohl an stationären Schleifmaschinen, mit denen die Schneidmesser unabhängig von der Erntemaschine im ausgebauten Zustand geschliffen werden, als auch insbesondere bei integrierten Schleifeinrichtungen an Schneidwerken, bei denen Schleifzeit gleich Maschinenstillstand bedeutet, ist dieser Umstand sehr nachteilig.

Deshalb liegt der vorliegenden Erfindung die Aufgabe zugrunde, ein verbessertes Schneidwerk für landwirtschaftliche Erntemaschinen der genannten Art zu schaffen, das Nachteile des Standes der Technik vermeidet und letzteren in vorteilhafter Weise weiterbildet. Insbesondere soll durch ein verbessertes Schneidmesser die Wirtschaftlichkeit der Erntemaschine durch Reduzierung der Schleifzeiten erhöht werden.

Erfindungsgemäß wird die genannte Aufgabe durch ein Schneidwerk gemäß Anspruch 1 gelöst. Bevorzugte Ausgestaltungen der Erfindung sind Gegenstand der abhängigen Ansprüche.

Gemäß der Erfindung wird also ein Schneidwerk vorgeschlagen, bei dem die Schneidmesser durch ihre vorteilhafte Gestaltung im Schneidenbereich über den gesamten Verschleißbereich eine möglichst gleichbleibende Breite der Nachschleiffläche aufweisen. Eine möglichst gleichbleibende Breite der Nachschleiffläche entlang der Schneide ergibt sich nur dann, wenn die Materialstärke, also die Messerdicke über den gesamten Verschleißbereich möglichst konstant ist. Deshalb weisen die Schneidmesser nach der Erfindung an ihrer glatten Flachseite, welche der Flachseite mit der angearbeiteten Wellenform am Schneidenrand gegenüberliegt, eine vertiefte, also konkave Kontur auf. Diese Vertiefung umfasst in der Ausdehnung zumindest den gesamten Nachschärfbereich / Verschleißbereich und ist geometrisch derart gestaltet, dass in diesem Bereich die Materialstärke der Schneidmesser zumindest annähernd gleichbleibend ist.

Durch diese vorteilhafte Gestaltung der Schneidmesser wird eine ebenso annähernd gleichbleibende Schleifflächenbreite über dem gesamten Verschleißbereich erzielt. Aus Rücksichtnahme auf unerwünschte Schwächung der Schneidmesser wird in der Praxis die theoretische Optimalkontur der Vertiefung vermieden, aber bereits der annähernde Kompromiss bringt dem erfindungsgemäßen Schneidwerk entscheidende Vorteile gegenüber dem Stand der Technik.

Die Herstellung der Schneidmesser erfolgt bevorzugt durch Ausschneiden der Messerplattenkontur im Laserverfahren und anschließendem Anpressen der Wellenkontur im späteren Schneidenbereich. Die durch das Pressen der Wellenkontur auf der Gegenseite der Schneidmesser entstehenden Durchdrückungen werden in einem weiteren Arbeitsgang durch Fräsbearbeitung zerspanend abgetragen. Ebenso wird die spätere Nachschleiffläche zur Bildung der Schneide angefräst.

In einer von der Fertigung her besonders wirtschaftlichen Ausführungsform der Schneidmesser ist es möglich die vertiefte Kontur, zur Optimierung des Nachschleifens, gleichzeitig beim abfräsen der Durchdrückungen zu fertigen. Bei geschickter Auswahl des Fräswerkzeuges entstehen so kein Mehraufwand und somit auch keine zusätzlichen Kosten.

Für die Herstellung einer optimalen Kontur der vertieften Freimachung sind eventuell weitere Bearbeitungsdurchgänge notwendig.

Gemäß einer alternativen Ausführungsform ist auch eine komplette Fertigung der Oberflächenkonturen an den Schneidmessern durch Material verdrängende Bearbeitung, also durch pressen der Konturen denkbar. Ein zerspanender Arbeitsgang zur Fertigung der Schneide müsste sich aber dennoch anschließen.

Die Erfindung wird im Folgenden unter Hinweis auf die beigefügten Figuren näher erläutert. Daraus ergeben sich auch weitere Einzelheiten und Vorteile der Erfindung. Es zeigen:
**Fig. 1** eine teilweise abgebrochene Darstellung einer als Ladewagen ausgeführten landwirtschaftlichen Erntemaschine mit einem erfindungsgemäßen Schneidwerk;
**Fig. 2** ein Schneidmesser des erfindungsgemäßen Schneidwerks nach Fig. 1 in Gesamtansicht einer Planseite;
**Fig. 3** eine Teilansicht des Schneidenbereichs eines Schneidmessers nach dem Stand der Technik in Schnittdarstellung;
**Fig. 4** eine Teilansicht des Schneidenbereichs eines Schneidmessers nach der Erfindung in Schnittdarstellung entsprechend Fig. 3.

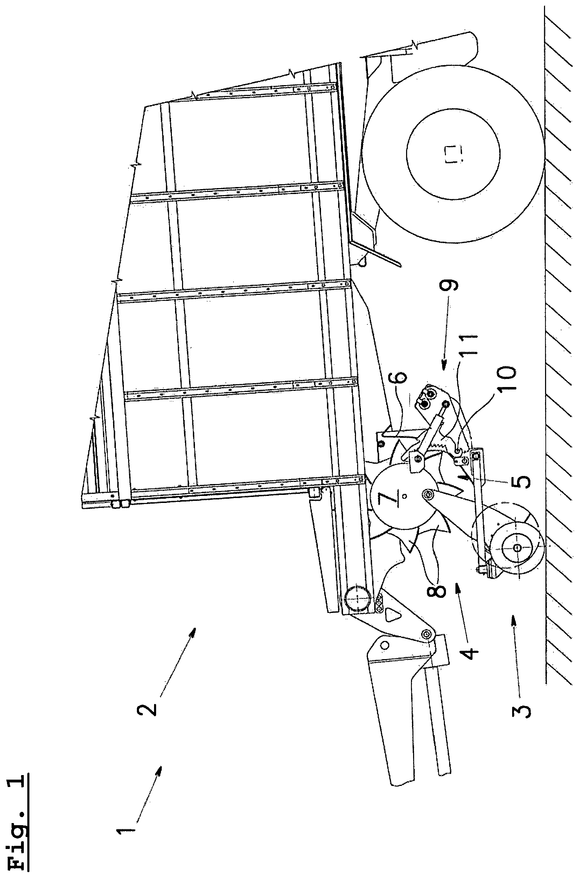

In Fig. 1 ist als Ausführungsbeispiel einer landwirtschaftlichen Erntemaschine 1 der vordere Teil eines Ladewagens 2 in teilweise schematischer Darstellung ersichtlich. Maschinenverkleidungen und andere verdeckende Bauteile sind zwecks besserer Erkennbarkeit erfindungsrelevanter Komponenten nicht dargestellt. Der Ladewagen 2 weist eine Aufnahmeeinrichtung 3 zur Aufnahme von am Boden liegendem Halm- und Blattgut sowie eine nachgeordnete Förder- und Schneideinrichtung 4 auf. Das vom Boden aufgenommene Erntegut wird von der Aufnahmeeinrichtung 3 an den Förderkanal 5 der Förder- und Schneideinrichtung 4 übergeben, dessen Rückwand 6 mit zueinander parallelen Schlitzen versehen ist. Die vordere Begrenzung des Förderkanals 5 wird durch die Fördertrommel 7 gebildet, die auf dem Umfang verteilt angeordnete Förderzinken 8 aufweist, welche das Erntegut durch den Förderkanal 5 in den Aufnahmeraum des Ladewagens 2 fördern.

Hinter der mit Schlitzen versehenen Rückwand 6 des Förderkanals 5 befindet sich das erfindungsgemäße Schneidwerk 9 der Förder- und Schneideinrichtung 4 mit den kammartig auf einer Messerstange 10 verschwenkbar angeordneten Schneidmessern 11, welche in der in Fig. 1 dargestellten Betriebsstellung in den Förderkanal 5 ragen und so im Zusammenwirken mit den umlaufenden Förderzinken 8 das Erntegut im Förderkanal 5 schneiden.

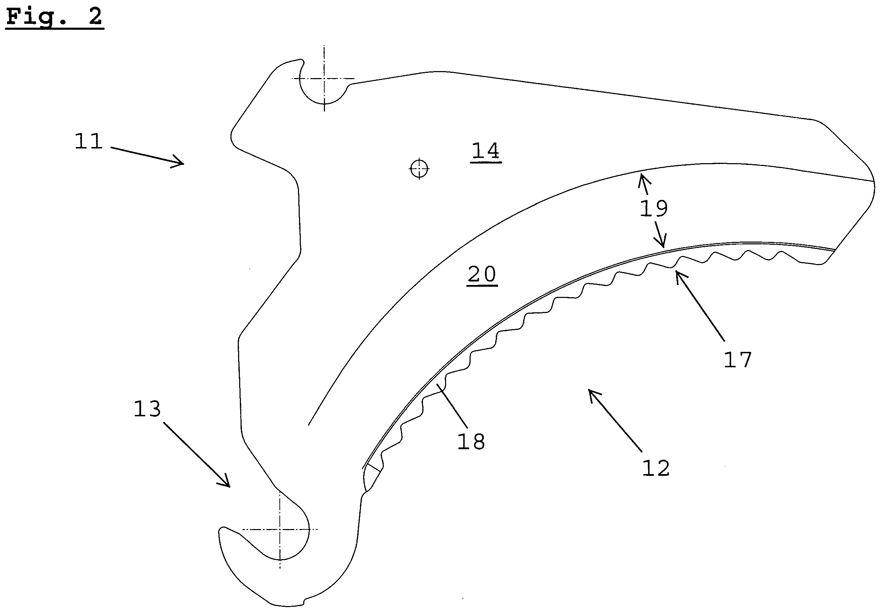

Die Darstellung der Fig. 2 zeigt ein Schneidmesser 11 des erfindungsgemäßen Schneidwerks 9. Das Schneidmesser 11 weist eine plattenförmige Grundgestalt mit einer Materialstärke von ca. 5 mm mit einer oberen Planseite 14 und einer unteren Planseite 15 auf und ist aus besonders hochwertigem, verschleißfestem Stahl gefertigt. Der Schneidbereich 12 ist in Abstimmung zur Fördertrommel 7, sichelförmig ausgebildet. Die weitere Außenkontur ist unter anderem zur schwenkbaren Lagerung auf der Messerstange 10 um die Lagerstelle 13 funktionsbedingt gestaltet.

Auf der, in Fig. 2 nicht sichtbaren, unteren Planseite 15 des Schneidmessers 11 ist im Randbereich des sichelförmigen Schneidbereichs 12 eine wellenförmige Oberflächenkontur 16 derart in einem flachen Winkel zur unteren Planseite 15 eingeprägt, dass sich das Schneidmesser 11 zum, die Schneide 17 bildenden Außenrand hin keilförmig verjüngt.

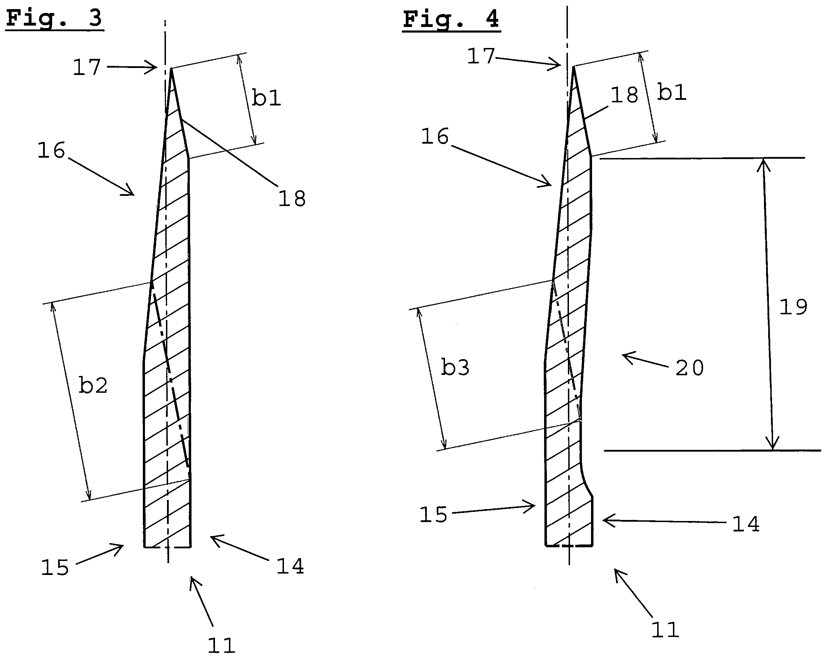

Fig. 3, welche einen Detailschnitt eines aus dem Stand der Technik bekannten Schneidmessers zeigt, ist dieses ebenso deutlich zu entnehmen wie der Fig. 4, welche einen entsprechenden Detailschnitt eines Schneidmessers 11 des erfindungsgemäßen Schneidwerks 9 darstellt. Ebenfalls machen beide Figuren deutlich, dass durch anfräsen einer schmalen Randfläche in einem flachen Winkel zur oberen Planseite 14 des Schneidmessers 11 ein optimaler Schnittwinkel der gewellten Schneide 17 geschaffen wird und eine Nachschleiffläche 18 entsteht.

Nachteilig an bisher bekannten Schneidmessern 11 ist der Fig .3 deutlich zu entnehmen wie sich bei fortschreitendem Verschleiß durch Nachschleifen der Schneidmesser 11 die anfängliche Nachschleiffläche 18 von einer Breite b1 fortlaufend vergrößert, bis bei Erreichen einer Verschleißgrenze eine wesentlich vergrößerte, maximale Nachschleiffläche 18 mit einer Breite b2 entstanden ist. Dieser, durch die Keilform bedingte Umstand hat nachteilig eine wesentlich verlängerte Schleifzeit und erhöhte Werkzeug- und Energiekosten zur Folge, welche sich bei einem kompletten Messersatz mit bis zu 50 Schneidmessern 11 eines Schneidwerks entsprechend vervielfachen.

Vorteilhaft anders sieht es bei den Schneidmessern 11 des Schneidwerks 9 nach der Erfindung aus. Wie der Fig.4 zu entnehmen ist, bewirkt eine zusätzliche, geometrisch geschickt gewählte Reduzierung des Messerquerschnitts im Bereich der Nachschleifzone 19 eine wesentliche Verbesserung des zuvor beschriebenen nachteiligen Umstands. Eine durch Materialabtrag oder Materialverdrängung hergestellte, zur oberen Planseite 14 vertieft ausgeformte Kontur 20 erstreckt sich dazu über den gesamten sichelförmigen Schneidbereich 12 des Schneidmessers 11.

Im theoretischen Idealfall wäre der Bereich der Nachschleifzone 19 so ausgeformt, dass er parallel zur Schräge der wellenförmigen Oberflächenkontur 16 verläuft. Damit wäre die Keilform gänzlich aufgehoben und damit die Breite der Nachschleiffläche b1 immer konstant. Da sich eine solche Ausführung durch die extreme Materialschwächung aber sehr nachteilig auf die Festigkeit und damit Belastbarkeit und Standzeit der Schneidmesser 11 auswirken würde, weist das Ausführungsbeispiel eine optimierte Kompromisslösung auf.

Die in Fig. 4 dargestellte Kontur 20 der Nachschleifzone 19 bewirkt eine erhebliche Reduzierung der zunehmenden Nachschleiffläche 18 bei fortschreitendem Messerverschleiß, ohne sich dabei nachteilig auf die Belastbarkeit und Standzeit der Schneidmesser 11 auszuwirken.

Wie den Figuren 3 und 4 deutlich zu entnehmen ist, vergrößert sich die Breite der Nachschleiffläche 18 des Schneidmessers 11 entsprechend dem Stand der Technik von einer Breite b1 bis zu einer Breite b2 die mehr als die zweifache Breite b1 beträgt. Das bedeutet mehr als eine Verdoppelung des Schleifaufwands während der Messerlebensdauer.

Durch die erfinderische Ausgestaltung der Schneidmesser 11 des Schneidwerks 9 nach der Erfindung hingegen, vergrößert sich die Breite der Nachschleiffläche 18 von einer gleichen Anfangsbreite b1 bis zu einer maximalen Breite b3 bei Erreichen der Verschleißgrenze, wobei die Zunahme der Schleifbreite nur ca. 50 % der zuvor beschriebenen Zunahme bisher bekannter Schneidmesser 11 beträgt.

## Patentansprüche

1. Schneidwerk für landwirtschaftliche Erntemaschinen wie beispielsweise Ladewagen oder Ballenpressen zum Ernten von landwirtschaftlichem Halm- oder Blattgut mit einem Förderkanal (5), in dem eine Mehrzahl von zumindest in einer Reihe angeordneten und in einer Schneidstellung in den Förderkanal (5) hineinragenden plattenförmigen Schneidmessern (11) mit einer oberen (14) und einer unteren Planseite (15), die umfangsseitig zumindest eine vorzugsweise sichelförmige Schneide (17) aufweisen, mit einem mit Förderzinken (8) versehenen Förderorgan (7) zur Halmgutzerkleinerung zusammenwirken, wobei die Schneidmesser (11) im Bereich der Schneide (17) einseitig eine derart angeformte wellenförmige Oberflächenkontur aufweisen, dass sich in diesem Bereich die Materialstärke radial nach außen zur Schneide (17) hin keilförmig reduziert , **dadurch gekennzeichnet, dass** der, dem Bereich der wellenförmigen Oberflächenkontur (16) gegenüberliegende Bereich auf der Gegenseite der Schneidmesser (11) im Anschluss einer randseitigen Nachschleiffläche (18) derart ausgeformt ist, dass sich die Keilform in diesem Bereich dadurch zumindest annähernd aufhebt.

2. Schneidwerk für landwirtschaftliche Erntemaschinen nach Anspruch 1, **dadurch gekennzeichnet, dass** der, dem Bereich der wellenförmigen Oberflächenkontur (16) der unteren Planseite (15) gegenüberliegende Bereich auf der oberen Planseite (14) der Schneidmesser (11) im Anschluss der randseitigen Nachschleiffläche (18), welcher einer Nachschleifzone (19) entspricht, derart ausgeformt ist, dass die Breite der Nachschleiffläche (18) bei mehrfachem Nachschleifen bis zu einer Verschleißgrenze zumindest annähernd konstant bleibt.

3. Schneidwerk für landwirtschaftliche Erntemaschinen nach Anspruch 2, **dadurch gekennzeichnet, dass** die Breite der Nachschleiffläche (18) bei mehrfachem Nachschleifen bis zur Verschleißgrenze den 1,6 fachen Anfangswert nicht übersteigt

4. Schneidwerk für landwirtschaftliche Erntemaschinen nach Anspruch 1, **dadurch gekennzeichnet, dass** der im Anschluss der randseitigen Nachschleiffläche (18) liegende Bereich zur oberen Planseite (14) der Schneidmesser (11) vertieft ausgeformt ist.

5. Schneidwerk für landwirtschaftliche Erntemaschinen nach zumindest einem der vorhergehenden Ansprüche, **dadurch gekennzeichnet, dass** der, dem Bereich der wellenförmigen Oberflächenkontur (16) gegenüberliegende Bereich der Nachschleifzone (19) durch spanende Bearbeitung ausgeformt ist.

6. Schneidwerk für landwirtschaftliche Erntemaschinen nach zumindest einem der Ansprüche 1 bis 4, **dadurch gekennzeichnet, dass** die Nachschleifzone (19) der oberen Planseite der Schneidmesser (11) im Anschluss der randseitigen Nachschleiffläche (18) durch Material verdrängende Bearbeitung ausgeformt ist.

## Claims

1. Cutting unit for agricultural harvesting machines, such as self-loading forage wagons or balers, for harvesting agricultural stalk or leaf products, comprising a conveying channel (5) in which a plurality of planar blades (11), which are arranged at least in a row, project into the conveying channel (5) when in a cutting position, have an upper (14) and a lower (15) flat face and comprise at least one preferably crescent-shaped cutting edge (17) on the periphery thereof, interact with a conveying member (7) for chopping stalk products, which member is provided with conveying tines (8), the blades (11) having, in the region of the cutting edge (17), an undulating surface contour on one side ,which contour is shaped such that the material thickness in said region reduces radially outwards towards the cutting edge (17) so as to form a wedge-shape,
**characterised in that**,
adjoining a resharpening edge surface (18), the region on the opposite face of the blade (11), opposite the region having the undulating surface contour (16), is shaped such that the wedge shape in said region is at least almost raised as a result.

2. Cutting unit for agricultural harvesting machines according to claim 1, **characterised in that**, adjoining to the resharpening edge surface (18) which corresponds to a resharpening zone (19), the region on the upper flat face (14) of the blade (11), opposite the region of the lower flat face (15) having the undulating surface contour (16), is shaped such that the width of the resharpening surface (18) remains at least almost constant over multiple resharpenings, until a wear limit is reached.

3. Cutting unit for agricultural harvesting machines according to claim 2, **characterised in that** the width of the resharpening surface (18) does not exceed 1.6 times the starting value over multiple resharpenings until the wear limit is reached.

4. Cutting unit for agricultural harvesting machines according to claim 1, **characterised in that** the region adjoining the resharpening edge surface (18) is shaped so as to be recessed towards the upper flat face (14) of the blade (11).

5. Cutting unit for agricultural harvesting machines according to at least one of the preceding claims, **characterised in that** the region of the resharpening zone (19) opposite the region having the undulating surface contour (16) is shaped by means of machining.

6. Cutting unit for agricultural harvesting machines according to at least one of claims 1 to 4, **characterised in that**, adjoining the resharpening edge surface (18), the resharpening zone (19) of the upper flat face of the blade (11) is shaped by means of material-displacing machining.

## Revendications

1. Outil de coupe destiné à des machines de récolte agricoles telles qu'à titre d'exemple des véhicules chargeurs ou des presses à balle destinés à récolter des produits agricoles en forme de tiges ou de feuilles équipé d'un canal d'alimentation (5) dans lequel plusieurs couteaux de coupe (11) en forme de plaque disposés sur au moins une rangée et pénétrant dans le canal d'alimentation (5) dans une position de coupe ayant un côté plan supérieur (14) et un côté plan inférieur (15) qui comportent sur leur périphérie au moins une lame (17) de préférence en forme de faucille, coopèrent avec un organe d'alimentation (7) équipé de griffes d'alimentation (8) permettant de fragmenter les plantes à tige, les couteaux de coupe (11) ayant sur un côté dans la zone de la lame (17), un contour de surface de forme ondulée réalisé de sorte dans cette zone, l'épaisseur de matériau se réduise en forme de coin vers l'extérieur en direction de la lame (17),
**caractérisé en ce que**
la zone opposée à la zone du contour de surface ondulé (16) située, sur le côté antagoniste du couteau de coupe (11) est formée à la suite d'une surface de réaffutage (18) située côté bord de sorte que dans cette zone la forme de coin soit au moins approximativement supprimée.

2. Outil de coupe destiné à des machines de récolte agricoles conforme à la revendication 1,
**caractérisé en ce que**
la zone opposée à la zone du contour de surface ondulé (16) du côté plan inférieur (15) située, sur le côté plan supérieur (14) du couteau de coupe (11) à la suite de la surface de réaffutage (18) située côté bord qui correspond à une zone de réaffutage (19) est réalisée de sorte que la largeur de la surface de réaffutage (18) reste au moins approximativement constante lors de plusieurs réaffutages jusqu'à une limite d'usure.

3. Outil de coupe destiné à des machines de récolte agricoles conforme à la revendication 2,
**caractérisé en ce que**
lors de plusieurs réaffutages la largeur de la surface de réaffutage (18) ne dépasse pas jusqu'à la limite d'usure 1,6 fois la valeur de départ.

4. Outil de coupe destiné à des machines de récolte agricoles conforme à la revendication 1,
**caractérisé en ce que**
la zone située à la suite de la surface de réaffutage (18) est située côté bord évidée vers le côté plat supérieur (14) du couteau de coupe (11).

5. Outil de coupe destiné à des machines de récolte agricoles conforme à au moins l'une des revendications précédentes,
**caractérisé en ce que**
la zone de la zone de réaffutage (19) opposée à la zone du contour de surface ondulé (16) est formée par usinage avec formation de copeaux.

6. Outil de coupe destiné à des machines de récolte agricoles conforme à au moins l'une des revendications 1 à 4,
**caractérisé en ce que**
la zone de réaffutage (19) du côté plan supérieur du couteau de coupe (11) située à la suite de la surface de réaffutage (18) située côté bord par usinage par déplacement de matériau.
